# FASCICULE DE BREVET EUROPEEN

(11) **EP 3 678 894 B1**
(45) Date de publication et mention de la délivrance du brevet: **29.09.2021**
(21) Numéro de dépôt: 18785414.6
(22) Date de dépôt: 02.08.2018
(51) Int. Cl.: B60N 2/015

(54) **DISPOSITIF D'ARRIMAGE D'UN SIEGE AMOVIBLE A UN PLANCHER DE VEHICULE AUTOMOBILE**
BEFESTIGUNGSVORRICHTUNG EINES ABNEHMBAREN SITZES AN EINEM KRAFTFAHRZEUGBODEN
ANCHORING DEVICE FOR A REMOVABLE SEAT ON A MOTOR VEHICLE FLOOR

(30) Priorité: 04.09.2017 FR 1758131
(43) Date de publication de la demande: 15.07.2020
(73) Titulaire: PSA Automobiles SA, 78300 Poissy (FR)
(72) Inventeur: PINTO TEIXEIRA, Frederic, 91160 Ballainvilliers (FR); COTTA, Gerald, 78450 Villepreux (FR)
(86) Numéro de dépôt international: PCT/FR2018/051999
(87) Numéro de publication internationale: WO 2019/043310

(56) Documents cités:
- FR-A1- 2 780 351
- US-A- 5 626 391

## Description

### Domaine de l'invention

La présente invention concerne d'une manière générale les véhicules automobiles de type van ou monospace dotés de sièges aptes à être montés de manière amovible sur le plancher de ce véhicule.

Elle vise en particulier un dispositif d'arrimage d'un tel siège amovible sur le plancher.

### Arrière-plan de l'invention

Les véhicules automobiles de type van ou monospace sont fréquemment équipés de sièges arrière montés de manière amovible sur le plancher de sorte à pouvoir être retirés facilement pour augmenter temporairement le volume de chargement.

Le document US5626391 décrit des ensembles de siège de véhicule destinés à être utilisés dans des véhicules à sièges multiples, tels que des mini-fourgonnettes et similaires, et plus particulièrement, de tels ensembles de siège de véhicule dans lesquels l'ensemble de siège de véhicule est mobile de manière pivotante entre une position abaissée et une position relevée, et est également amovible du véhicule.

Tel que décrit par exemple dans la demande de brevet française FR 3 001 926, le montage d'un tel siège amovible s'effectue classiquement par l'intermédiaire de deux dispositifs d'arrimage latéraux comportant chacun un longeron fixé rigidement au plancher du véhicule et présentant une paroi latérale portant deux tourillons métalliques transversaux avant et arrière , ainsi qu'un flasque fixé rigidement à une partie latérale correspondante de l'armature d'assise du siège et comprenant des moyens aptes à coopérer avec ces tourillons pour arrimer le siège au plancher.

Plus précisément, ces moyens d'arrimage comprennent en partie avant du flasque une première encoche longitudinale débouchant vers l'avant et prévue pour engager le tourillon avant, ainsi qu'en partie arrière du flasque une seconde encoche verticale débouchant vers le bas et prévue pour engager le tourillon arrière.

L'arrimage du siège au plancher du véhicule s'effectue dans un premier temps en le translatant longitudinalement vers l'avant de manière à engager les encoches avant des deux flasques avec les deux tourillons avant correspondants des longerons, puis en le faisant pivoter vers le bas autour de ces tourillons avant de manière à engager les encoches arrière de ces deux flasques avec les deux tourillons arrière correspondants des longerons.

Afin d'empêcher tout retrait accidentel du siège, les moyens d'arrimage comportent en outre sur chacun des flasques un cliquet mobile monté à rotation et apte à venir fermer l'extrémité inférieure débouchante de la seconde encoche verticale de sorte à verrouiller le tourillon arrière correspondant au fond de cette encoche.

A l'usage, il arrive parfois lors de la mise en place du siège par le propriétaire du véhicule que ce dernier engage uniquement l'encoche avant d'un premier flasque dans le tourillon avant du longeron correspondant, tandis que l'extrémité avant du second flasque repose en porte-à-faux sur le tourillon avant de l'autre longeron.

Cette mauvaise manipulation n'empêchant pas l'engagement des encoches arrière des deux flasques avec les deux tourillons arrière correspondants des longerons ni leur verrouillage par les verrous mobiles, le propriétaire du véhicule ne s'en rend pas forcément compte et des passagers risquent d'utiliser le siège alors que celui-ci n'est pas arrimé correctement ce qui pose des problèmes de sécurité évidents et peut également entraîner sa détérioration.

### Objet et résumé de l'invention

La présente invention vise donc à éviter un mauvais arrimage du siège sur le plancher du véhicule.

Elle propose à cet effet un dispositif d'arrimage d'un siège amovible à un plancher de véhicule automobile comportant un longeron destiné à être fixé rigidement audit plancher selon une direction longitudinale et présentant une paroi latérale portant deux tourillons métalliques transversaux avant et arrière, ainsi qu'un flasque destiné à être fixé rigidement à une partie latérale correspondante de l'armature d'assise dudit siège, ledit flasque comprenant dans sa partie avant une première encoche longitudinale débouchant vers l'avant et prévue pour engager ledit tourillon avant, et dans sa partie arrière une seconde encoche verticale débouchant vers le bas et prévue pour engager ledit tourillon arrière ;
caractérisé en ce qu'il comporte en outre un organe de guidage lié rigidement audit longeron, ledit organe comprenant un élément de butée situé à l'aplomb dudit tourillon avant et étant agencé de sorte que l'écartement entre cet élément de butée et ledit tourillon avant soit supérieur à la distance séparant ladite encoche avant du bord supérieur dudit flasque afin d'autoriser l'engagement de cette dernière sur ce tourillon avant, et de sorte que cet écartement soit également inférieur à la hauteur de l'extrémité avant dudit flasque afin d'empêcher que ce dernier ne puisse venir reposer en porte-à-faux sur ledit tourillon avant.

La présence de cet organe de guidage permet ainsi d'empêcher que l'encoche verticale arrière du flasque ne puisse s'engager sur le tourillon arrière du longeron tant que l'encoche longitudinale avant de ce flasque n'est pas correctement engagée sur le tourillon avant de ce longeron.

Le dispositif d'arrimage selon l'invention s'avère ainsi particulièrement sûr pour les usagers tandis que sa durée de vie se trouve également sensiblement rallongée vis-à-vis des dispositifs d'arrimage actuels.

Selon des caractéristiques préférées du dispositif d'arrimage selon l'invention :
- l'écartement entre ledit élément de butée et ledit tourillon avant est compris entre 30 et 70 mm ;
- ledit organe de guidage comprend un élément de guidage latéral s'étendant parallèlement à ladite paroi latérale dudit longeron et agencé de sorte que l'écartement entre cet élément de guidage latéral et cette paroi latérale soit légèrement supérieur à l'épaisseur de l'extrémité avant dudit flasque de sorte à assurer son guidage latéral lors de l'engagement de ladite encoche avant sur ledit tourillon avant ;

- ledit élément de butée est conformé de sorte à ne pouvoir être engagé par ladite encoche avant dudit flasque ;
- ledit organe de guidage est constitué par un fil métallique plié et soudé à la partie avant dudit longeron ;
- ledit fil métallique présente un diamètre compris entre 6 et 8 mm ;
- ledit tourillon avant est agencé à l'extrémité avant dudit longeron, ledit fil comportant successivement une première portion d'extrémité soudée sur l'extrémité avant dudit longeron, une portion rectiligne inférieure s'étendant transversalement à l'avant dudit longeron en regard dudit tourillon avant, une portion rectiligne distale s'étendant vers le haut parallèlement à ladite paroi latérale dudit longeron et constituant ledit élément de guidage latéral, et une portion supérieure s'étendant transversalement en direction ladite paroi latérale et constituant ledit élément de butée;
- ledit fil comporte, en outre et successivement après ladite portion supérieure, une portion rectiligne proximale s'étendant vers le bas jusqu'audit longeron, et une seconde portion d'extrémité soudée sur la partie avant dudit longeron ;
- ledit longeron comprend une semelle prévue pour reposer contre ledit plancher ainsi qu'un retour d'équerre latéral s'étendant perpendiculairement à ladite semelle le long de l'un de ses bord latéraux et formant ladite paroi latérale portant lesdits tourillons ; et/ou
- ladite semelle et ledit retour d'équerre sont réalisés d'une seule pièce par emboutissage à partir d'une tôle métallique préalablement découpée.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue en élévation du dispositif d'arrimage selon un mode de réalisation préféré de l'invention ;
- la figure 2 est une vue agrandie en perspective de la partie avant du dispositif de la figure 1 en configuration arrimée ;
- la figure 3 représente une vue agrandie en élévation de la partie avant du dispositif de la figure 1 illustrant une erreur de manipulation lors de l'engagement de l'encoche longitudinale avant du flasque ;
- les figures 4 et 5 sont des vues similaires aux figures 2 et 3 d'un dispositif d'arrimage conforme à un deuxième mode de réalisation de l'invention ;
- les figures 6 et 7 sont des vues similaires aux figures 2 et 3 d'un dispositif d'arrimage conforme à un troisième mode de réalisation de l'invention ; et
- les figures 8 et 9 sont des vues similaires aux figures 2 et 3 d'un dispositif d'arrimage conforme à un quatrième mode de réalisation de l'invention.

### Description détaillée de plusieurs modes préférés de réalisation

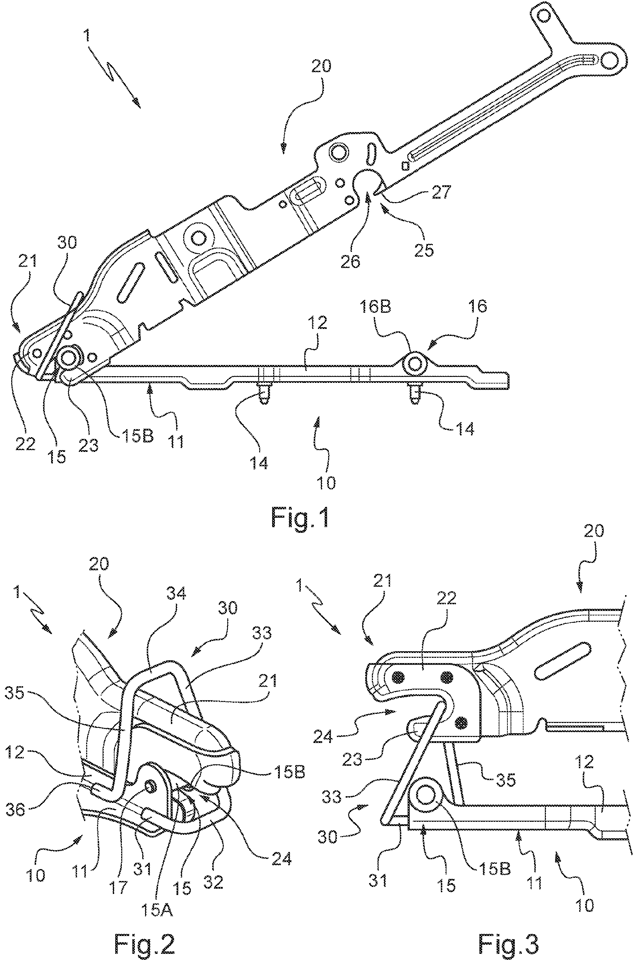

En référence à la figure 1, le dispositif d'arrimage 1 selon l'invention comporte classiquement un longeron 10 destiné à être fixé rigidement au plancher du véhicule selon une direction longitudinale, ainsi qu'un flasque 20 destiné à être fixé rigidement à une partie latérale correspondante de l'armature d'assise d'un siège non représentée.

Par convention et dans la suite de cette description, les termes « avant », « arrière », « supérieur », « inférieur », « haut », « bas », « interne », « externe », « longitudinal » et « transversal » seront définis par rapport à l'orientation habituelle du dispositif d'arrimage selon l'invention dans l'habitacle d'un véhicule automobile.

Le longeron 10 comprend ici une semelle 11 prévue pour reposer contre le plancher du véhicule et un retour d'équerre latéral 12 s'étendant perpendiculairement à cette semelle 11 le long de l'un de ses bords latéraux (ces éléments étant mieux visibles sur la figure 2).

La semelle 11 et le retour d'équerre 12 sont avantageusement réalisés d'une seule pièce par emboutissage d'une tôle métallique préalablement découpée.

Le longeron 10 présente deux orifices circulaires (non visibles sur les figures) ménagés dans la semelle 11 afin de permettre sa fixation par vissage sur le plancher du véhicule. Il comprend également de manière avantageuse des moyens destinés à assurer un pré-positionnement provisoire de ce longeron 10 sur ce plancher afin de faciliter les opérations de vissage.

Ces moyens de pré-positionnement sont en l'espèce constitués par deux pions 14 saillant perpendiculairement à la semelle 11 depuis sa face inférieure.

Le longeron 10 comporte en outre deux tourillons avant 15 et arrière 16 s'étendant transversalement depuis la face du retour d'équerre 12 tournée à l'opposé de la semelle 11 et étant agencés respectivement à l'extrémité avant et dans la partie arrière de ce longeron 10.

Chaque tourillon 15, 16, réalisé avantageusement dans un matériau métallique, comprend une gorge centrale cylindrique 15A (celle du tourillon arrière 16 n'étant pas visible sur les figures) bordée latéralement de part et d'autre par deux collerettes 15B, 16B formant des butées de retenue latérale.

Chacun des tourillons 15, 16 est avantageusement fixé au retour d'équerre 12 par l'intermédiaire d'une tige filetée 17 saillant transversalement depuis l'une de ses collerettes et étant vissée sur un orifice taraudé correspondant ménagé dans ce retour d'équerre 12 (figure 2).

Ces tourillons 15, 16 présentent de préférence une largeur inférieure à 100 mm et avantageusement inférieure à 70 mm de sorte à limiter l'intensité du moment fléchissant s'exerçant au niveau de la zone de fixation de ces derniers sur le retour d'équerre 12.

Le flasque 20, dont l'épaisseur est légèrement inférieure à la largeur des gorges 15A des tourillons 15, 16, comporte des moyens d'arrimage aptes à coopérer avec ces tourillons 15, 16 pour arrimer le siège au plancher du véhicule.

Ces moyens d'arrimage comprennent une fourchette 21 formant l'extrémité avant de ce flasque 20 et comprenant deux branches parallèles longitudinales 22, 23 délimitant entre elles une encoche longitudinale avant 24 en forme de U débouchant vers l'avant et prévue pour recevoir la gorge 15A du tourillon avant 15.

Les moyens d'arrimage comportent également un crochet 25 définissant une encoche verticale arrière 26 en forme de U débouchant vers le bas et prévue pour recevoir la gorge du tourillon arrière 16, ainsi qu'un cliquet mobile 27 monté à rotation selon un axe transversal et apte à venir fermer l'extrémité inférieure débouchante de l'encoche arrière 26 de sorte à verrouiller automatiquement le tourillon arrière 16 au fond de cette dernière.

L'arrimage du flasque 20 sur le longeron 10 s'effectue dans un premier temps en le translatant longitudinalement vers l'avant de manière à engager l'encoche avant 24 de la fourchette 21 avec la gorge 15A du tourillon avant 15 (voir figure 1), puis en le faisant pivoter vers le bas autour de ce tourillon avant de manière à engager l'encoche arrière 26 du crochet 25 avec la gorge du tourillon arrière 16.

Selon l'invention, le dispositif d'arrimage 1 comporte en outre des moyens de guidage destinés à empêcher toute possibilité d'engagement de l'encoche arrière 26 du flasque 20 avec la gorge du tourillon arrière 16 tant que l'encoche avant 24 de ce flasque 20 n'a pas été engagée correctement avec la gorge 15A du tourillon avant 15.

Tel qu'illustré en particulier par la figure 2, ces moyens de guidage sont constitués par un fil métallique plié 30 de diamètre avantageusement compris entre 6 et 8 mm et comportant successivement :
- une première portion longitudinale rectiligne d'extrémité 31 soudée sur l'extrémité avant du longeron 10 à l'opposé du tourillon avant 15, et au niveau de la ligne de pliage interne entre la semelle 11 et le retour d'équerre 12 ;
- une portion rectiligne inférieure 32 s'étendant transversalement à l'avant du longeron 10, parallèlement et en regard du tourillon avant 15 ;
- une portion rectiligne distale 33 s'étendant vers le haut et vers l'arrière, parallèlement au retour d'équerre 12 ;
- une portion rectiligne supérieure 34 formant butée, de longueur identique à celle de la portion inférieure 32, et s'étendant transversalement en direction du retour d'équerre 12 ;
- une portion rectiligne proximale 35 s'étendant vers le bas et vers l'arrière jusqu'à la face du retour d'équerre 12 opposée au tourillon avant 15 ; et
- une seconde portion rectiligne d'extrémité 36 soudée sur la partie avant du longeron 10 à l'opposé du tourillon avant 15 et en arrière de la première portion d'extrémité 31 au niveau de la ligne de pliage interne entre la semelle 11 et le retour d'équerre 12.

L'écartement entre ce tourillon avant 15 et la portion supérieure 34 du fil 30 est supérieur à la distance séparant l'encoche 24 du bord supérieur du flasque 20 (cette distance correspondant ici à la hauteur de la branche supérieure de la fourchette 21 formant l'extrémité avant du flasque 20) de sorte à autoriser l'engagement de cette encoche 24 sur ce tourillon avant 15.

Cet écartement est également inférieur à la hauteur de la fourchette 21 de sorte à empêcher que ce dernier ne puisse venir reposer en porte-à-faux sur le tourillon avant 15.

En pratique, cet écartement sera avantageusement compris entre 30 et 70 mm.

Tel qu'illustré par la figure 3, il est possible que l'usager engage malencontreusement l'encoche 24 de la fourchette 21 sur la portion supérieure 34 du fil 30.

Dans un tel cas de figure, l'écartement en hauteur entre l'extrémité avant du flasque 20 et le tourillon avant 15 empêche toutefois l'engagement de l'encoche verticale arrière 26 de ce flasque 20 avec le tourillon arrière 16 ce qui oblige donc le propriétaire du véhicule à reprendre la procédure d'arrimage du siège.

Par ailleurs, l'écartement entre le retour d'équerre 12 du longeron 10 et la portion distale 33 du fil 30 est légèrement supérieur à l'épaisseur de la fourchette 21 formant l'extrémité avant du flasque 20, de sorte à assurer le guidage latéral de ce flaque 20 lors de l'engagement de son encoche avant 24 sur le tourillon avant 15.

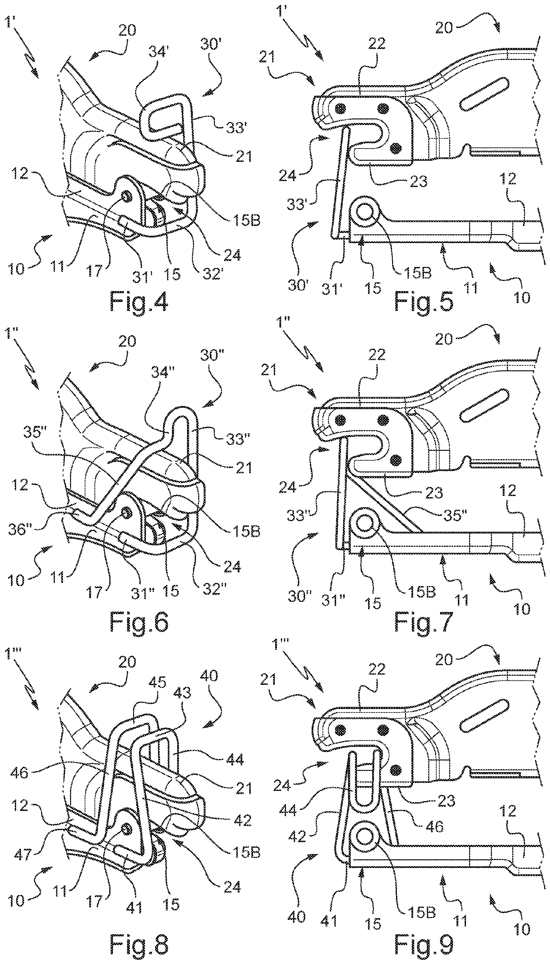

On va maintenant décrire rapidement et à l'appui des figures 4 et 5, le dispositif d'arrimage 1' selon un deuxième mode de réalisation de l'invention.

Dans la suite et sur ces figures 4 et 5, on a gardé les mêmes références pour les éléments identiques au premier mode de réalisation et on a ajouté un prime pour les éléments similaires.

Le dispositif d'arrimage 1' est semblable au dispositif 1 décrit précédemment mis à part qu'il comporte en lieu et place du fil 30 un fil de guidage 30'.

Ce dernier comporte successivement :
- une première portion longitudinale rectiligne d'extrémité 31' soudée sur l'extrémité avant du longeron 10 à l'opposé du tourillon avant 15, et au niveau de la ligne de pliage interne entre la semelle 11 et le retour d'équerre 12 ;
- une portion rectiligne inférieure 32' s'étendant transversalement à l'avant du longeron 10, parallèlement et en regard du tourillon avant 15 ;
- une portion rectiligne distale 33' s'étendant vers le haut et parallèlement au retour d'équerre 12 ; et
- une portion supérieure d'extrémité en U 34' formant butée, s'étendant transversalement selon un plan vertical en direction du retour d'équerre 12 et dont l'extrémité libre vient à fleur de la portion rectiligne distale 33'.

Comme pour le premier mode de réalisation, l'écartement entre le tourillon avant 15 et la portion supérieure 34' du fil 30' est supérieur à la distance séparant l'encoche 24 du bord supérieur du flasque 20 mais inférieur à la hauteur de l'extrémité avant du flasque 20, tandis que l'écartement entre le retour d'équerre du longeron 10 et la portion distale 33' du fil 30' est légèrement supérieur à l'épaisseur de l'extrémité avant du flasque 20.

En outre, la portion supérieure 34' présente une hauteur (définie ici par l'écartement entre les deux branches du U) supérieure à la largeur de l'encoche 24, de sorte à empêcher l'engagement de cette encoche 24 sur cette portion supérieure 34' du fil 30' tel qu'illustré par la figure 5.

Le fil 30' présente cependant en contrepartie l'inconvénient d'être moins rigide que le fil 30 puisqu'il ne comporte qu'un point de fixation sur le longeron 10.

On va maintenant décrire rapidement et à l'appui des figures 6 et 7, le dispositif d'arrimage 1" selon un troisième mode de réalisation de l'invention.

Dans la suite et sur ces figures 6 et 7, on a gardé les mêmes références pour les éléments identiques au premier mode de réalisation et on a ajouté un double prime pour les éléments similaires.

Le dispositif d'arrimage 1" est semblable au dispositif 1 décrit précédemment mis à part qu'il comporte en lieu et place du fil 30 un fil de guidage 30".

Ce dernier comporte successivement :
- une première portion longitudinale rectiligne d'extrémité 31" soudée sur l'extrémité avant du longeron 10 à l'opposé du tourillon avant 15, et au niveau de la ligne de pliage interne entre la semelle 11 et le retour d'équerre 12 ;
- une portion rectiligne inférieure 32" s'étendant transversalement à l'avant du longeron 10, parallèlement et en regard du tourillon avant 15 ;
- une portion rectiligne distale 33" s'étendant vers le haut ;
- une portion supérieure courbée en point d'interrogation 34", formant butée et s'étendant transversalement et vers le bas en direction du retour d'équerre 12 ;
- une portion rectiligne proximale 35" s'étendant vers le bas et vers l'arrière jusqu'à la face du retour d'équerre 12 opposée au tourillon avant 15 ; et
- une seconde portion rectiligne d'extrémité 36" soudée sur la partie avant du longeron 10 à l'opposé du tourillon avant 15 et en arrière de la première portion d'extrémité 31" au niveau de la ligne de pliage interne entre la semelle 11 et le retour d'équerre 12.

Comme pour le premier mode de réalisation, l'écartement entre le tourillon avant 15 et la portion supérieure 34" du fil 30" est supérieur à la distance séparant l'encoche 24 du bord supérieur du flasque 20 mais inférieur à la hauteur de l'extrémité avant du flasque 20, tandis que l'écartement entre le retour d'équerre du longeron 10 et la portion distale 33" du fil 30' est légèrement supérieur à l'épaisseur de l'extrémité avant du flasque 20.

En outre, la forme particulière de la portion supérieure 34" permet d'empêcher l'engagement de cette encoche 24 sur cette portion supérieure 34" du fil 30" tel qu'illustré par la figure 7.

On va maintenant décrire rapidement et à l'appui des figures 8 et 9, le dispositif d'arrimage 1''' selon un quatrième mode de réalisation de l'invention.

Dans la suite et sur ces figures 8 et 9, on a gardé les mêmes références pour les éléments identiques au premier mode de réalisation.

Le dispositif d'arrimage 1''' est semblable au dispositif 1 décrit précédemment mis à part qu'il comporte en lieu et place du fil 30 un fil de guidage 40.

Ce dernier comporte successivement :
- une première portion rectiligne d'extrémité 41 soudée sur l'extrémité avant du longeron 10 à l'opposé du tourillon avant 15, et au niveau de la ligne de pliage interne entre la semelle 11 et le retour d'équerre 12 ;
- une première portion rectiligne proximale 42 s'étendant à l'avant du longeron 10 vers le haut et vers l'arrière ;
- une première portion rectiligne supérieure 43 formant butée et s'étendant transversalement, parallèlement et en regard du tourillon avant 15 ;
- une portion distale en forme de U 44 s'étendant vers le bas selon un plan longitudinal vertical parallèle au retour d'équerre 12 ;
- une seconde portion rectiligne supérieure 45 formant butée et s'étendant transversalement en direction du retour d'équerre 12 et parallèlement à la portion 43 ;
- une seconde portion rectiligne proximale 46 s'étendant vers le bas et vers l'arrière jusqu'à la face du retour d'équerre 12 opposée au tourillon avant 15 ; et
- une seconde portion rectiligne d'extrémité 47 soudée sur la partie avant du longeron 10 à l'opposé du tourillon avant 15 et en arrière de la première portion d'extrémité 41 au niveau de la ligne de pliage interne entre la semelle 11 et le retour d'équerre 12.

Comme pour le premier mode de réalisation, l'écartement entre le tourillon avant 15 et les portions supérieures 43, 45 du fil 30' est supérieur à la distance séparant l'encoche 24 du bord supérieur du flasque 20 mais inférieur à la hauteur de l'extrémité avant du flasque 20, tandis que l'écartement entre le retour d'équerre du longeron 10 et la portion distale en U 44 du fil 40 est légèrement supérieur à l'épaisseur de l'extrémité avant du flasque 20.

Ce mode de réalisation permet d'améliorer le guidage de la fourchette 21 lors de l'engagement de son encoche 24 sur le tourillon avant 15.

En contrepartie, et tel qu'illustré par la figure 9, il n'empêche pas l'usager d'engager malencontreusement l'encoche 24 de la fourchette 21 sur les portions supérieures 43 et 45 du fil 30.

Selon des variantes de réalisation non représentées, les moyens de guidage sont constitués différemment.

Ces derniers peuvent par exemple être formés d'une tôle métallique pliée et soudée sur le retour d'équerre ou à partir de la même tôle constituant la semelle et ce retour d'équerre.

Ils peuvent également comporter une platine fixée sur l'avant du longeron et sur laquelle est soudée un fil métallique plié.

Selon d'autres variantes de réalisation non représentées, les tourillons présentent une forme et/ou des dimensions différentes. Ils peuvent par exemple présenter une forme de diabolo avec une gorge centrale cylindrique bordée latéralement de parte et d'autre par deux calottes tronconiques ou sphéroïdales.

Ces tourillons peuvent être rapportés par vissage sur le taraudage d'un écrou rapporté par soudure sur la face interne du retour d'équerre (c'est-à-dire celle tournée vers la semelle) au niveau d'un orifice ménagé dans ce dernier. Ces derniers peuvent être également fixés de manière différente au retour d'équerre du longeron et par exemple par soudage.

Selon encore d'autres variantes de réalisation non représentées, le flasque et/ou longeron le sont conformés différemment. Ce dernier peut par exemple être constitué par un barreau métallique plein ou creux à section rectangulaire.

## Revendications

1. Dispositif d'arrimage d'un siège amovible à un plancher de véhicule automobile comportant un longeron (10) destiné à être fixé rigidement audit plancher selon une direction longitudinale et présentant une paroi latérale (12) portant deux tourillons métalliques transversaux avant (15) et arrière (16), ainsi qu'un flasque (20) destiné à être fixé rigidement à une partie latérale correspondante de l'armature d'assise dudit siège, ledit flasque (20) comprenant dans sa partie avant une première encoche longitudinale (24) débouchant vers l'avant et prévue pour engager ledit tourillon avant (15), et dans sa partie arrière une seconde encoche verticale (26) débouchant vers le bas et prévue pour engager ledit tourillon arrière (16) ;
**caractérisé en ce qu'**il comporte en outre un organe de guidage (30 ; 30' ; 30" ; 40) lié rigidement audit longeron (10), ledit organe comprenant un élément de butée (34 ; 34' ; 34" ; 43, 45) situé à l'aplomb dudit tourillon avant (15) et étant agencé de sorte que l'écartement entre cet élément de butée et ledit tourillon avant soit supérieur à la distance séparant ladite encoche avant (24) du bord supérieur dudit flasque (20) afin d'autoriser l'engagement de cette dernière sur ce tourillon avant (15), et de sorte que cet écartement soit également inférieur à la hauteur de l'extrémité avant dudit flasque (20) afin d'empêcher que ce dernier ne puisse venir reposer en porte-à-faux sur ledit tourillon avant (15).

2. Dispositif d'arrimage selon la revendication 1, **caractérisé en ce que** l'écartement entre ledit élément de butée (34 ; 34' ; 34" ; 43, 45) et ledit tourillon avant (15) est compris entre 30 et 70 mm.

3. Dispositif d'arrimage selon l'une des revendications 1 ou 2, **caractérisé en ce que** ledit organe de guidage (30 ; 30' ; 30" ; 40) comprend un élément de guidage latéral (33 ; 33' ; 33" ; 34") s'étendant parallèlement à ladite paroi latérale (12) dudit longeron (10) et agencé de sorte que l'écartement entre cet élément de guidage latéral et cette paroi latérale soit légèrement supérieur à l'épaisseur de l'extrémité avant dudit flasque (20) de sorte à assurer son guidage latéral lors de l'engagement de ladite encoche avant (24) sur ledit tourillon avant (15).

4. Dispositif d'arrimage selon l'une des revendications 1 à 3, **caractérisé en ce que** ledit élément de butée (34' ; 34") est conformé de sorte à ne pouvoir être engagé par ladite encoche avant (24) dudit flasque (20).

5. Dispositif d'arrimage selon l'une des revendications 1 à 4, **caractérisé en ce que** ledit organe de guidage (30 ; 30' ; 30" ; 40) est constitué par un fil métallique plié et soudé à la partie avant dudit longeron (10).

6. Dispositif d'arrimage selon la revendication 5, **caractérisé en ce que** ledit fil métallique présente un diamètre compris entre 6 et 8 mm.

7. Dispositif d'arrimage selon l'une des revendications 3 à 6, **caractérisé en ce que** ledit tourillon avant (15) est agencé à l'extrémité avant dudit longeron (10), ledit fil comportant successivement une première portion d'extrémité (31 ; 31' ; 31") soudée sur l'extrémité avant dudit longeron (10), une portion rectiligne inférieure (32 ; 32' ; 32") s'étendant transversalement à l'avant dudit longeron (10) en regard dudit tourillon avant (15), une portion rectiligne distale (33 ; 33' ; 33") s'étendant vers le haut parallèlement à ladite paroi latérale (12) dudit longeron (10) et constituant ledit élément de guidage latéral, et une portion supérieure (34 ; 34' ; 34") s'étendant transversalement en direction de ladite paroi latérale (12) et constituant ledit élément de butée.

8. Dispositif d'arrimage selon la revendication 7, **caractérisé en ce que** ledit fil comporte, en outre et successivement après ladite portion supérieure (34 ; 34"), une portion rectiligne proximale (35 ; 35") s'étendant vers le bas jusqu'audit longeron (10), et une seconde portion d'extrémité (36 ; 36") soudée sur la partie avant dudit longeron (10).

9. Dispositif d'arrimage selon l'une des revendications 1 à 8, **caractérisé en ce que** ledit longeron (10) comprend une semelle (11) prévue pour reposer contre ledit plancher ainsi qu'un retour d'équerre latéral (12) s'étendant perpendiculairement à ladite semelle (11) le long de l'un de ses bord latéraux et formant ladite paroi latérale portant lesdits tourillons (15, 16).

10. Dispositif d'arrimage selon la revendication 9, **caractérisé en ce que** ladite semelle (11) et ledit retour d'équerre (12) sont réalisés d'une seule pièce par emboutissage à partir d'une tôle métallique préalablement découpée.

## Patentansprüche

1. Vorrichtung zum Befestigen eines abnehmbaren Sitzes an einem Fahrzeugboden mit einem Längsträger (10), der in Längsrichtung fest an dem Boden befestigt werden soll und eine Seitenwand (12) aufweist, die zwei vordere (15) und hintere (16) quer verlaufende Metallzapfen trägt, sowie einem Flansch (20), der fest an einem entsprechenden Seitenteil des Sitzrahmens des Sitzes befestigt werden soll, wobei der Flansch (20) in seinem vorderen Teil eine erste nach vorne mündende Längskerbe (24), die zum Eingreifen des vorderen Zapfens (15) vorgesehen ist, und in seinem hinteren Teil eine zweite vertikale Kerbe (26), die nach unten mündet und zum Eingreifen des hinteren Zapfens (16) vorgesehen ist;
**dadurch gekennzeichnet, dass** sie außerdem ein Führungsorgan (30; 30' 30 40) fest mit dem Längsträger (10) verbunden, wobei das Element ein Anschlagelement (34) aufweist; 34' 34 43, 45), die sich hinter dem Vorderzapfen (15) befindet und so angeordnet ist, dass der Abstand zwischen diesem Anschlagelement und dem Vorderzapfen größer ist als der Abstand zwischen der Vordernut (24) und der Oberkante des Flansches (20), um deren Eingriff an dem Vorderzapfen (15) zu ermöglichen, und dass dieser Abstand ebenfalls kleiner ist als die Höhe des Vorderendes des Flansches (20)), um zu verhindern, dass der Drehzapfen freitragend auf dem Vorderzapfen ruht (15).

2. Stauvorrichtung nach Anspruch 1, **dadurch gekennzeichnet, dass** der Abstand zwischen dem Anschlagelement (34; 34' 34 43, 45) und der vordere Zapfen (15) zwischen 30 und 70 mm beträgt.

3. Stauvorrichtung nach einem der Ansprüche 1 oder 2, **dadurch gekennzeichnet, dass** das Führungselement (30; 30' 30 40. ein seitliches Führungselement (33) aufweist; 33' 33 34"), die sich parallel zu der Seitenwand (12) des Längsträgers (10) erstrecken und so angeordnet sind, dass der Abstand zwischen dem seitlichen Führungselement und der Seitenwand etwas größer ist als die Dicke des vorderen Endes des Flansches (20), sodass seine seitliche Führung beim Eingriff der vorderen Nut (24) mit dem vorderen Zapfen (15) gewährleistet ist.

4. Stauvorrichtung nach einem der Ansprüche 1 bis 3, **dadurch gekennzeichnet, dass** das Anschlagelement (34'; 34") so geformt ist, dass er nicht von der vorderen Kerbe (24) des Flansches (20) in Eingriff gebracht werden kann.

5. Stauvorrichtung nach einem der Ansprüche 1 bis 4, **dadurch gekennzeichnet, dass** das Führungselement (30; 30' 30 40) besteht aus einem gefalteten und an der Vorderseite des Längsträgers (10) verschweißten Draht.

6. Stauvorrichtung nach Anspruch 5, **dadurch gekennzeichnet, dass** der Draht einen Durchmesser zwischen 6 und 8 mm aufweist.

7. Stauvorrichtung nach einem der Ansprüche 3 bis 6, **dadurch gekennzeichnet, dass** der vordere Zapfen (15) am vorderen Ende des Längsträgers (10) angeordnet ist, wobei der Draht sukzessive einen ersten Endabschnitt (31; 31' 31") an das vordere Ende des Längsträgers (10) angeschweißt ist, einen unteren geraden Abschnitt (32); 32' 32"), die sich quer vor dem Längsträger (10) vor dem Vorderzapfen (15) erstrecken, einen distalen geraden Abschnitt (33); 33' 33") sich parallel zu der Seitenwand (12) des Längsträgers (10) nach oben erstreckt und das seitliche Führungselement bildet, sowie einen oberen Abschnitt (34; 34' 34") sich quer zur Seitenwand (12) erstreckt und das Anschlagelement bildet.

8. Stauvorrichtung nach Anspruch 7, **dadurch gekennzeichnet, dass** der Draht ferner nacheinander nach dem oberen Abschnitt (34; 34") einen proximalen geraden Abschnitt (35); 35") sich nach unten bis zum Längsträger (10) und einem zweiten Endabschnitt (36; 36") an der Vorderseite des Längsträgers (10) angeschweißt.

9. Verzurrvorrichtung nach einem der Ansprüche 1 bis 8, **dadurch gekennzeichnet, dass** der Längsträger (10) eine Sohle (11) umfasst, die zum Aufliegen an dem Boden vorgesehen ist, sowie einen seitlichen Winkelrücklauf (12), der sich senkrecht zu der Sohle (11) entlang einer ihrer Seitenkanten erstreckt und die die Zapfen (15, 16) tragende Seitenwand bildet.

10. Stauvorrichtung nach Anspruch 9, **dadurch gekennzeichnet, dass** die Sohle (11) und der Winkelrücklauf (12) einstückig durch Tiefziehen aus einem vorgestanzten Metallblech hergestellt sind.

## Claims

1. A stowage device for a removable seat to a motor vehicle floor comprising a longeron (10) intended to be rigidly fixed to that floor in a longitudinal direction and having a side wall (12) carrying two transverse metal swirls before (15) and rear (16), and a flask (20) intended to be rigidly fixed to a corresponding side part of the seating frame said seat, said flask (20) comprising in its front part a first longitudinal notch (24) leading forward and intended to engage said front swivel (15), and in its rear part a second vertical notch (26) leading downwards and intended to engage said rear swivel (16);
**characterized in that** it also includes a guiding member (30; 30'; 30"; 40) rigidly bound to said longeron (10), said member comprising a stop element (34; 34'; 34"; 43, 45) located on the edge of said front whirlwind (15) and arranged so that the spacing between this stop element and said front whirlwind is greater than the distance between said front notch (24) and the upper edge of said flask (20) in order to allow the latter to engage on this front whirlwind (15), and so that this gap or also less than the height of the front end of said flask (20) in order to prevent the flask from coming to rest in a forged seat on said forequarter (15).

2. A stowage device according to claim 1, **characterized in that** the spacing between said stop element (34; 34'; 34"; 43, 45) and said front whirlwind (15) is between 30 and 70 mm.

3. A stowage device according to one of claims 1 or 2, **characterized in that** said guide member (30; 30'; 30"; 40) includes a side guide element (33; 33'; 33"; 34") extending parallel to said lateral wall (12) of said longeron (10) and arranged so that the spacing between this side guide element and this side wall is slightly greater than the thickness of the front end of said flask (20) so as to ensure its lateral guidance when the said front notch (24) is engaged on said front swivel (11) 5).

4. A stowage device according to one of claims 1 to 3, **characterized in that** said stop element (34'; 34") is so conformed that it cannot be engaged by said notch before (24) said flask (20).

5. A stowage device according to one of claims 1 to 4, **characterized in that** said guide member (30; 30'; 30"; 40) consists of a metal wire folded and welded to the front part of said longeron (10).

6. A stowage device according to claim 5, **characterized in that** said wire has a diameter between 6 and 8 mm.

7. A stowage device according to one of claims 3 to 6, **characterized in that** said front swivel (15) is arranged at the front end of said longeron (10), said wire successively comprising a first portion of end (31; 31'; 31") welded on the front end of said longeron (10), a lower straight portion (32; 32'; 32") extending transverse to the front of said longeron (10) opposite said front swirl (15), a distal straight portion (33; 33'; 33") extending upwards parallel to said lateral wall (12) of said longeron (10) and constituting said lateral guide element, and a higher portion (34; 34'; 34") extending transverse towards said side wall (12) and constituting said stop element.

8. A stowage device according to claim 7, **characterized in that** said wire further and successively comprises after said upper portion (34; 34"), a proximal straight portion (35; 35") extending downwards to audit longeron (10), and a second end portion (36; 36") welded on the front portion of said longeron (10).

9. A stowage device according to one of claims 1 to 8, **characterized in that** said longeron (10) comprises a sole (11) intended to stand against said floor and a return of lateral square (12) extending perpendicular to said sole (11) along one of its lateral edges and forming said side wall bearing said swivels (15, 11) 6).

10. A stowage device according to claim 9, **characterized in that** said sole (11) and said bracket return (12) are made from a previously cut metal sheet into a single piece by wrapping.
